# EUROPEAN PATENT APPLICATION

(11) **EP 4 661 470 A1**
(43) Date of publication of application: **10.12.2025**
(21) Application number: 24755996.6
(22) Date of filing: 31.01.2024
(51) Int. Cl.: H04W 24/02

(54) **METHOD FOR CONFIGURING REFERENCE SIGNAL RESOURCE, AND COMMUNICATION APPARATUS**

(30) Priority: 16.02.2023 CN 202310156077
(71) Applicant: Huawei Technologies Co., Ltd., Shenzhen, Guangdong 518129 (CN)
(72) Inventor: LIU, Lifu, Shenzhen, Guangdong 518129 (CN); LI, Yuan, Shenzhen, Guangdong 518129 (CN); XUE, Songyan, Shenzhen, Guangdong 518129 (CN); CHEN, Hongzhi, Shenzhen, Guangdong 518129 (CN); SUN, Yan, Shenzhen, Guangdong 518129 (CN)
(74) Representative: Thun, Clemens
(86) International application number: PCT/CN2024/074952
(87) International publication number: WO 2024/169622

(57) **Abstract**

This application provides a reference signal resource configuration method and a communication apparatus, and may be applied to AI scenarios or non-AI scenarios. In the method, a second network element (reference signal resource configuration network element) configures a first reference signal resource set for a first network element (reference signal resource measurement network element) based on first information. All reference signal resources configured by the second network element are indicated to the first network element based on second information. The first network element may determine a reference signal resource set group based on the second information. The first network element may learn, based on the first information and the second information, whether the first reference signal resource set is all the reference signal resources configured by the second network element, to learn of a status of all the reference signal resources configured by the second network element. Even if a quantity of reference signal resources configured by the second network element exceeds a maximum quantity of reference signal resources that the first network element can support, the first network element may learn of all the reference signal resources configured by the second network element.

## Description

This application claims priority to Chinese Patent Application No. 202310156077.7, filed with the China National Intellectual Property Administration on February 16, 2023 and entitled "REFERENCE SIGNAL RESOURCE CONFIGURATION METHOD AND COMMUNICATION APPARATUS", which is incorporated herein by reference in its entirety.

### TECHNICAL FIELD

Embodiments of this application relate to the field of wireless communication technologies, and more specifically, to a reference signal resource configuration method and a communication apparatus.

### BACKGROUND

In communication systems, to combat free space loss, massive antenna arrays are usually employed to apply weighting on signals, concentrating signal energy within a smaller range to form a beam-like (referred to as beam) signal, thereby ensuring transmission quality. Due to hardware limitations, it is difficult for a base station to cover an entire cell. Therefore, the base station adopts periodic beam sweeping for area coverage. For example, the base station constructs a set of beams at one time point to cover a part of an area, and constructs another set of beams at another time point to cover another part of the area. After the base station completes coverage of the entire cell within a specific period of time, the base station restarts a new round of beam sweeping. Terminal devices selects beams suitable for the terminal devices by traversing a large quantity of candidate beams.

According to current communication protocols, a network device can configure up to 64 beams for each terminal device within one beam sweeping period. However, due to capability limitations of the terminal device, the terminal device cannot support sweeping of 64 beams in one beam sweeping period. For example, the terminal device can sweep a maximum of 16 or 32 beams. In other words, a quantity of beams configured by the network device in one beam sweeping period exceeds a maximum quantity of beams that the terminal device can support sweeping. In this case, how the terminal device determines all beams configured by the network device is an urgent problem to be resolved.

### SUMMARY

This application provides a reference signal resource configuration method and a communication apparatus, and provides a solution in which a terminal device determines all reference signal resources configured by a network side when a quantity of reference signal resources configured by the network side exceeds a maximum quantity of reference signal resources that the terminal device can support in one reference signal configuration period.

A first aspect provides a reference signal resource configuration method. The method may be performed by a network element, or may be performed by a chip or a circuit. This is not limited in this application. The following uses a first network element as an example for description. The method may include:
the first network element receives first information from a second network element, where the first information is used to configure a first reference signal resource set; and
the first network element receives second information from the second network element, where the second information is used to determine a reference signal resource set group, the reference signal resource set group includes one or more reference signal resource sets, and the one or more reference signal resource sets include the first reference signal resource set.

In the technical solution of this application, the second network element configures the first reference signal resource set for the first network element based on the first information. All reference signal resources configured by the second network element are indicated to the first network element based on second information. The first network element may determine the reference signal resource set group based on the second information, where the reference signal resource set group includes the one or more reference signal resource sets, and the one or more reference signal resource sets include the first reference signal resource set. Based on the first information and the second information, the first network element may learn that the first reference signal resource set includes all the reference signal resources configured by the second network element, or may learn that the first reference signal resource set is further associated with one or more other reference signal resource sets. In the former case, the first network element may determine that reference signal resources in the first reference signal resource set are all the reference signal resources configured by the second network element. In the latter case, the first network element may determine that all the reference signal resources configured by the second network element include the reference signal resources in the first reference signal resource set and reference signal resources in the one or more other reference signal resource sets.

Optionally, a quantity of reference signal resources included in the first reference signal resource set may be less than or equal to a maximum quantity of reference signal resources that the second network element can support.

Based on the foregoing technical solution provided in this application, when the second network element configures reference signal resources, a quantity of reference signal resources is not limited by the maximum quantity of reference signal resources that the first network element can support. Even if the quantity of reference signal resources that can be configured by the second network element is greater than the maximum quantity of reference signal resources, the second network element can send the second information to the first network element, so that the first network element can learn that the second network element configures at least two reference signal resource sets. In this way, flexibility of reference signal resource configuration can be improved, and a capability of a reference signal resource measurement network element (namely, the first network element) is no longer a limitation.

With reference to the first aspect, in some implementations of the first aspect, the method further includes:
the first network element measures a reference signal based on the first information, to obtain a measurement result; and
the first network element generates input information and/or target output information for an AI model based on the measurement result and the second information.

Based on this implementation, UE may obtain a training dataset for training the AI model once.

With reference to the first aspect, in some implementations of the first aspect, the method further includes:
the first network element measures a reference signal based on the first information, to obtain a measurement result;
the first network element determines a reporting manner based on the second information, where the reporting manner indicates a quantity of reporting times of reporting information; and
the first network element generates reporting information based on the determined reporting manner and the measurement result.

Based on this implementation, the second network element can obtain, based on the reporting information of the first network element, input information and/or target output information corresponding to an AI model on a network side, and the second network element can complete training of the AI model once based on the information.

A second aspect provides a reference signal resource configuration method. The method may be performed by a network element, or may be performed by a chip or a circuit. This is not limited in this application. The following uses a second network element as an example for description. The method may include:
the second network element sends first information to a first network element, where the first information is used to configure a first reference signal resource set; and
the second network element sends second information to the first network element, where the second information is used to determine a reference signal resource set group, the reference signal resource set group includes one or more reference signal resource sets, and the one or more reference signal resource sets include the first reference signal resource set.

In some implementations of the second aspect, the method further includes:
the second network element receives reporting information from the first network element, where the reporting information includes one or more of the following:
a measurement result of at least one reference signal resource in the one or more reference signal resource sets included in the reference signal resource set group;
L measurement results in the measurement result of the at least one reference signal resource in the one or more reference signal resource sets included in the reference signal resource set group, where L is a positive integer; and
information about L reference signal resources that is obtained based on the measurement result of the at least one reference signal resource in the one or more reference signal resource sets included in the reference signal resource set group, where L is a positive integer.

In some implementations of the second aspect, the method further includes:
the second network element determines input information and/or target output information for an AI model based on the reporting information.

Based on this implementation, a training dataset for training the AI model once may be obtained.

In some implementations of the first aspect or the second aspect, the second information includes one or more of the following:
a quantity of reference signal resource sets included in the reference signal resource set group;
periodicity information of the reference signal resource set group;
an identifier of each reference signal resource set included in the reference signal resource set group;
an identifier of configuration information of each reference signal resource set included in the reference signal resource set group;
pattern information of the one or more reference signal resource sets included in the reference signal resource set group in the reference signal resource set group; and
information about an association relationship of the one or more reference signal resource sets included in the reference signal resource set group.

In some implementations of the first aspect or the second aspect, the second information is included in one piece of indication signaling; or the second information is included in multiple pieces of indication signaling, where if the second information is included in the multiple pieces of indication signaling, each of the multiple pieces of indication signaling corresponds to one reference signal resource set in the reference signal resource set group.

In this implementation, the first network element can obtain the second information by identifying indication signaling configured in a reference signal resource.

In some implementations of the first aspect or the second aspect, the second information is included in multiple pieces of configuration signaling, and first configuration signaling in the multiple pieces of configuration signaling includes an identifier of the reference signal resource set group and the first information.

In some implementations of the first aspect or the second aspect, the information about the association relationship includes one or more of the following:
a sequence number of a relative location of the first reference signal resource set in the reference signal resource set group; and
an association relationship between the first reference signal resource set and a second reference signal resource set in the reference signal resource set group.

In this implementation, the first network element associates different reference signal resources based on an association relationship indicated in the second information, and uses the associated reference signal resources as a reference signal resource group or a reference signal resource set group corresponding to one AI operation.

In some implementations of the first aspect or the second aspect, the reporting information is carried in physical layer signaling or carried in higher layer signaling.

In some implementations of the first aspect or the second aspect, the reporting information is carried in one piece of higher layer signaling, and a quantity of reporting times is one. The quantity of reporting times depends on a reporting manner, and the reporting manner is determined by the first network element based on the second information.

Based on this implementation, the first network element sends the reporting information to the second network element by using the higher layer signaling, and the quantity of reporting times is one, so that the first network element can report reporting information with higher precision. This helps broaden a data range of the reporting information.

In some implementations of the first aspect or the second aspect, the reporting information includes one or more of the following:
a measurement result of at least one reference signal resource in the one or more reference signal resource sets included in the reference signal resource set group;
L measurement results in the measurement result of the at least one reference signal resource in the one or more reference signal resource sets included in the reference signal resource set group, where L is a positive integer; and
information about L reference signal resources that is obtained based on the measurement result of the at least one reference signal resource in the one or more reference signal resource sets included in the reference signal resource set group, where L is a positive integer.

Based on this implementation, a value of L may be determined by using a preset rule. When the AI model is on the second network element, measurement results of the L reference signal resources are reported as the input information for the AI model.

In some implementations of the first aspect or the second aspect, the input information for the AI model includes one or more of the following:
the measurement result of the at least one reference signal resource in the one or more reference signal resource sets included in the reference signal resource set group; and
information about M measurement results or M reference signal resources that is determined based on the measurement result of the at least one reference signal resource in the one or more reference signal resource sets included in the reference signal resource set group, where M is a positive integer.

Based on this implementation, a value of M may be determined by using a preset rule. When the AI model is on the first network element, measurement results of the M reference signal resources are directly used as the input information for the AI model.

In some implementations of the first aspect or the second aspect, the target output information for the AI model includes one or more of the following:
the measurement result of the at least one reference signal resource in the one or more reference signal resource sets included in the reference signal resource set group; and
information about N reference signal resources that is determined based on the measurement result of the at least one reference signal resource in the one or more reference signal resource sets included in the reference signal resource set group, where N is a positive integer.

Based on this implementation, a value of N may be determined by using a preset rule. When AI is deployed on either the first network element or the second network element, measurement results of the N reference signals or reference signal resource information of the N reference signals compared based on a measurement standard is used as the target output information for the AI model.

In some implementations of the first aspect or the second aspect, the second information is included in the multiple pieces of configuration signaling, and each of the multiple pieces of configuration signaling is used to configure one reference signal resource set in the reference signal resource set group; and
the reporting information is carried on a first uplink time-frequency resource, and the first uplink time-frequency resource is configured by using second configuration signaling in the multiple pieces of configuration signaling, where
the second configuration signaling is a latest piece of configuration signaling in the multiple pieces of configuration signaling, or the second configuration signaling is configuration signaling for configuring a target reference signal resource set, and the target reference signal resource set is a reference signal resource set whose relative location is the latest in time domain in the reference signal resource set group.

In this implementation, the first network element determines, by identifying a time sequence, a reference signal resource set at a latest relative location and all reference signal resource sets before the reference signal resource set as mutually associated reference signal resource sets, to determine the reference signal resource set group.

According to a third aspect, this application provides a communication apparatus. The communication apparatus may include modules that are in one-to-one correspondence with methods/operations/steps/actions that are configured to perform the first aspect to the second aspect. The module may be a hardware circuit, may be software, or may be implemented by a hardware circuit in combination with software. The communication apparatus may be a first network element, a second network element, or a chip or a circuit used for the first network element or the second network element.

In an implementation, the communication apparatus is a communication device. For example, the communication device may include a communication unit and/or a processing unit. The communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an example, the communication apparatus is a terminal device, or the communication apparatus is a chip, a chip system, a circuit, or the like disposed in a terminal device. In another example, the communication apparatus is an access network device, or the communication apparatus is a chip, a chip system, a circuit, or the like disposed in an access network device.

According to a fourth aspect, this application provides a communication apparatus. The communication apparatus includes a processor, and the processor is configured to execute a computer program or instructions stored in a memory, to perform the method according to the first aspect, the second aspect, or any one of the implementations of the first aspect or the second aspect. Optionally, the communication apparatus further includes the memory. The communication apparatus may be a first network element, a second network element, or a chip or a circuit used for the first network element or the second network element.

According to a fifth aspect, this application provides a communication apparatus. The communication apparatus includes a processor and a communication interface, and is configured to perform the method according to the first aspect, the second aspect, or any one of the implementations of the first aspect or the second aspect. For example, the communication interface may be a transceiver, a hardware circuit, a bus, a module, a pin, or another type of communication interface.

According to a sixth aspect, this application further provides a computer program. When the computer program is run on a computer, the computer is caused to perform the method according to the first aspect, the second aspect, or any one of the implementations of the first aspect or the second aspect.

According to a seventh aspect, this application further provides a computer program product, including instructions. When the instructions are run on a computer, the computer is caused to perform the method according to the first aspect, the second aspect, or any one of the implementations of the first aspect or the second aspect.

According to an eighth aspect, this application further provides a computer-readable storage medium. The computer-readable storage medium stores a computer program or instructions. When the computer program or instructions are run on a computer, the computer is caused to perform the method according to the first aspect, the second aspect, or any one of the implementations of the first aspect or the second aspect.

According to a ninth aspect, this application further provides a chip. The chip is configured to read a computer program stored in a memory, to perform the method according to the first aspect, the second aspect, or any one of the implementations of the first aspect or the second aspect, or the chip includes a circuit configured to perform the method according to the first aspect, the second aspect, or any one of the implementations of the first aspect or the second aspect.

According to a tenth aspect, this application further provides a chip system. The chip system includes a processor, configured to support an apparatus in implementing the method according to the first aspect, the second aspect, or any one of the implementations of the first aspect or the second aspect. In a possible design, the chip system further includes a memory. The memory is configured to store a program and data that are necessary for the apparatus. The chip system may include a chip, or may include a chip and another discrete device.

According to an eleventh aspect, this application provides a communication system, including the first network element and the second network element.

For example, one of the first network element and the second network element is a terminal device, and the other is a network device like an access network device.

For technical effects of the solutions provided in any one of the second aspect to the eleventh aspect or the implementations of the second aspect to the eleventh aspect, refer to corresponding descriptions in the first aspect. Details are not described again.

### BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a schematic flowchart of a reference signal resource configuration method according to this application;
FIG. 4 is a diagram of a reference signal resource configuration method according to this application;
FIG. 5 shows an example of a reference signal resource configuration method according to this application;
FIG. 6 shows another example of a reference signal resource configuration method according to this application;
FIG. 7 is a block diagram of a communication apparatus 1000 according to this application; and
FIG. 8 is a block diagram of a communication apparatus 1100 according to this application.

### DESCRIPTION OF EMBODIMENTS

The following describes the technical solutions of this application with reference to the accompanying drawings.

To facilitate understanding of the technical solutions in this application, related concepts or technologies in embodiments in this application are first briefly described.

Beams are communication resources. A beam may be a wide beam, a narrow beam, or another type of beam. A technology for forming a beam may be beamforming technology or another technical means. The beamforming technology may be specifically a digital beamforming technology, an analog beamforming technology, or a hybrid digital/analog beamforming technology. Different beams may be considered as different resources. Optionally, multiple beams having same or similar communication features may be considered as one beam. One beam may include one or more antenna ports for transmission of data channels, control channels, sounding signals, and the like. The one or more antenna ports forming the beam may be considered as an antenna port set. The beam includes a transmit beam and a receive beam. The transmit beam refers to distribution of signal strength formed in different directions in space after signal are transmitted from antennas, and the receive beam refers to distribution of signal reception enhancement or attenuation in different spatial directions by antenna arrays.

According to current communication protocols, beam information may be indicated by a quasi co-location (quasi co-location, QCL) relationship of antenna ports. Specifically, indication information (for example, downlink control information (downlink control information, DCI)) may indicate that one resource (or antenna port) and another resource (or antenna port) have a quasi co-location relationship, to indicate that beams corresponding to the two resources (or antenna ports) have one or more same or similar spatial features (or spatial parameters), and a same receive beam may be used for receiving.

Optionally, according to communication protocols, a beam may be specifically represented by using identifiers of various signals, for example, a resource index of a channel state information reference signal (channel state information reference signal, CSI-RS), an index of a synchronization signal broadcast channel block (synchronous signal/physical broadcast channel block, SSB), a resource index of a sounding reference signal (sounding reference signal, SRS), and a resource index of a tracking reference signal (tracking reference signal, TRS).

In addition, generally, one beam corresponds to one or more of the following: one demodulation reference signal (demodulation reference signal, DMRS) port, one transmission configuration indicator (transmission configuration indicator, TCI), or one sounding reference signal resource indicator (SRS resource indicator, SRI). Therefore, different beams may also be represented by using different DMRS ports, TCIs, or SRIs.

The technical solutions provided in this application may be applied to various communication systems. For example, the communication systems include but are not limited to a long term evolution (long term evolution, LTE) system, a 5th generation (5th generation, 5G) communication system, a wireless local area network (wireless local area network, WLAN) system, a satellite communication system, a future communication system, for example, a 6G communication system, or a system integrating multiple systems. The 5G communication system may also be referred to as a new radio (new radio, NR) system.

A network element in the communication system may send a signal to another network element or receive a signal from another network element. The signal may include information, signaling, data, or the like. The network element may also be replaced with an entity, a network entity, a device, a communication device, a communication module, a node, a communication node, or the like. In this application, the network element is used as an example for description.

A communication system to which this application is applicable may include a first network element and a second network element. A quantity of first network elements and a quantity of second network elements are not limited. The network element may also be replaced with a device, an entity, a network entity, a communication device, a communication module, a node, a communication node, or the like. In this application, a device or a network element is used as an example for description.

For example, a communication system to which this application is applicable may include a terminal device and a network device.

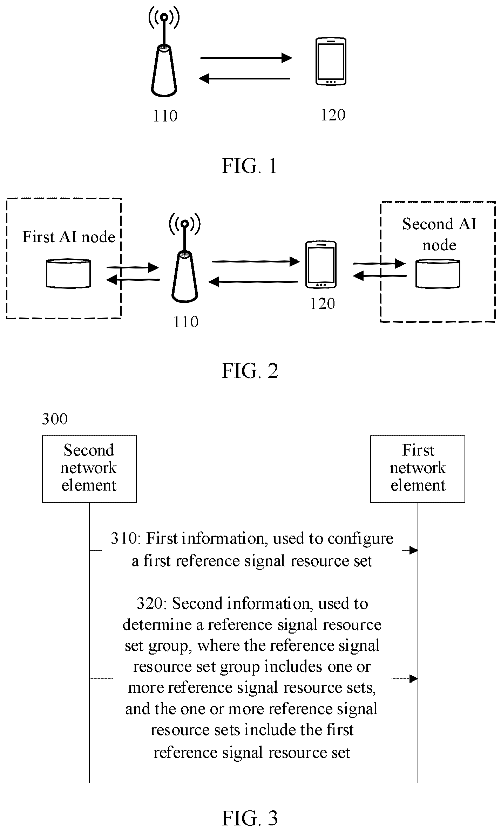

FIG. 1 is a diagram of an architecture of a communication system to which an embodiment of this application is applicable. For example, the communication system includes a network device 110 and a terminal device 120. The terminal device 120 may access the network device 110, and communicate with the network device 110. Optionally, the network device 110 may be an access network device. Optionally, the communication system may further include at least one artificial intelligence (artificial intelligence, AI) node. In an implementation, an AI node is deployed in the network device 110 and/or the terminal device 120. In other words, the AI node is deployed inside the network device 110 or the terminal device 120, that is, the AI node is a module of the network device 110 or the terminal device 120, which is not shown in FIG. 1. In another implementation, the at least one AI node is separated from the network device 110 and/or the terminal device 120, as shown in FIG. 2.

FIG. 2 is a diagram of an architecture of another communication system to which an embodiment of this application is applicable. The communication system includes a network device 110, a terminal device 120, a first AI node, and/or a second AI node. The network device 110 may forward, to the first AI node, AI model-related data reported by the terminal device. The first AI node performs an AI-related operation such as training dataset construction and AI model training, and provides one or more of outputs of the AI-related operation such the trained AI model, model evaluation, and a test result for the network device 110. The terminal device 120 operates similarly. The terminal device 120 may send the obtained AI model-related data to the second AI node, and the second AI node performs an AI-related operation. After completing the AI-related operation, the second AI node provides one or more of outputs of the AI-related operation for the terminal device 120.

It should be understood that FIG. 1 and FIG. 2 are merely diagrams. The communication system may further include other devices, for example, a core network device, a wireless relay device, a wireless backhaul device, and/or a device configured to implement an artificial intelligence function, which are not all shown in FIG. 1 and FIG. 2. In addition, during actual application, the wireless communication system may include multiple network devices (for example, an access network device and a core network device), or may include multiple terminal devices. This is not limited. A quantity of devices shown in FIG. 1 and FIG. 2 is merely an example, and the quantity of devices is not limited to one or more, and is not limited.

In embodiments of this application, the terminal device may be an entity configured to receive or transmit a signal, for example, a mobile phone. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device may be widely applied to various scenarios, for example, cellular communication, a wireless fidelity (wireless fidelity, Wi-Fi) system, device-to-device (device-to-device, D2D), vehicle-to-everything (vehicle-to-everything, V2X), peer-to-peer (peer-to-peer, P2P), machine-to-machine (machine-to-machine, M2M), machine type communication (machine type communication, MTC), an internet of things (internet of things, IoT), virtual reality (virtual reality, VR), augmented reality (augmented reality, AR), industrial control, self-driving, telemedicine, a smart grid, smart furniture, a smart office, smart wearable, intelligent transportation, a smart city, an uncrewed aerial vehicle, robotics, remote sensing, passive sensing, positioning, navigation and tracking, and self-delivery and mobility. Some examples of the terminal device are as follows: user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initialization protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart household device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), wireless terminals in a smart city (smart city) like a smart fuel dispenser and a terminal device on a high-speed railway, and wireless terminals in a smart home (smart home) like a smart speaker, a smart coffee machine, and a smart printer. The terminal device may be a wireless device in the foregoing various scenarios or an apparatus disposed in the wireless device, for example, a communication module, a modem, or a chip in the foregoing device. The terminal device may also be referred to as a terminal, UE, a mobile station (mobile station, MS), a mobile terminal (mobile terminal, MT), or the like. The terminal device may further include a position reference device, for example, an automated guided vehicle (automated guided vehicle, AGV) or a device having a similar function. For ease of description, the following uses an example in which the terminal device is UE for description.

In this application, a communication apparatus configured to implement a function of the terminal device may be a terminal device, or may be an apparatus, for example, a chip system, that can support a communication device in implementing a function of the terminal device. The apparatus may be installed in the terminal device, or may be used in combination with the terminal device. The chip system may include a chip, or may include a chip and another discrete device. In the method in this application, an example in which the communication apparatus configured to implement the function of the terminal device is the terminal device is used for description.

The network device may be a device that provides a wireless communication function service, may communicate with the terminal device, and is usually located on a network side. The network device may be an access network device or a radio access network device. For example, the network device may be a base station. For example, the access network device in embodiments of this application includes but is not limited to a next generation NodeB (gNodeB, gNB) in a 5G communication system, a base station in a 6th generation (6th generation, 6G) mobile communication system, a base station in a future mobile communication system, an access node (access point, AP) in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB or a home NodeB, HNB), a baseband unit (base-band unit, BBU), a transmission reception point (transmission reception point, TRP), a transmitting point (transmitting point, TP), a base transceiver station (base transceiver station, BTS), a satellite, and an uncrewed aerial vehicle. In a network structure, the network device may include a central unit (central unit, CU) node, may include a distributed unit (distributed unit, DU) node, may be a RAN device including a CU node and a DU node, or may be a RAN device including a control plane CP node, a user plane CU node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may be alternatively a communication module, a modem, or a chip disposed in the foregoing device or apparatus. The base station may be alternatively a mobile switching center, a device that performs a base station function in device-to-device (device-to-device, D2D), vehicle-to-everything (vehicle-to-everything, V2X), or machine-to-machine (machine-to-machine, M2M) communication, a network device in a 6G network, a device that performs a base station function in a future communication system, or the like. The base station can support networks using a same access technology or different access technologies. This is not limited. The base station may be fixed or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

An apparatus configured to implement a function of the network device may be a network device, or may be an apparatus that can support a communication device in implementing a function of the network device in this application, for example, a chip system, a hardware circuit, a software module, or a hardware circuit plus a software module. The apparatus may be mounted in the network device or may be used in combination with the network device. In the method in this application, an example in which the apparatus configured to implement the function of the network device is the network device is used for description.

The communication system may further include a network element having an artificial intelligence function. A link related to an AI model design, for example, one or more of a data collection link (for example, collecting training data and/or inference data), a model training link, and a model inference link, may be performed by one or more network elements having an artificial intelligence function. In a possible design, an AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system can detect a network running status, optimize a network connection and network performance, improve network stability, and reduce network maintenance costs. Alternatively, in another possible design, an independent network element may be introduced into the communication system to perform an AI-related operation, for example, AI model training. The independent network element may be referred to as an AI network element, an AI node, or the like. The name is not limited in the present disclosure. The AI network element may be directly connected to the access network device in the communication system, or may be indirectly connected to the access network device via a third-party network element. The third-party network element may be a core network device, for example, an authentication management function (authentication management function, AMF) network element or a user plane function (user plane function, UPF) network element, a network management system, a cloud server, or another network element. This is not limited. Optionally, the AI network element may be a hardware device, a software function running on dedicated hardware, a software function running on general-purpose hardware, for example, a virtualization function instantiated on a platform (for example, a cloud platform), or an entity including a dedicated or general-purpose hardware device and a software function. Optionally, the AI network element may be located in a server, for example, located in a host or a cloud server of an OTT system.

In the present disclosure, one or more parameters may be obtained through inference by using one model. Training processes for different models may be deployed on different devices or nodes, or may be deployed on a same device or node. Inference processes for different models may be deployed on different devices or nodes, or may be deployed on a same device or node. This is not limited in the present disclosure.

The following describes, with reference to the accompanying drawings, a reference signal resource configuration method provided in this application.

Embodiments provided in this application may be applied to the wireless communication system shown in FIG. 1 or FIG. 2. For example, a first network element may be the terminal device 120 in FIG. 1 or FIG. 2, and a second network element may be the network device 110 in FIG. 1 or FIG. 2. It may be understood that, when an AI model is not disposed in a terminal device or a network device, AI model-related information, for example, input-related information or output-related information of the AI model, may be transferred by the terminal device or the network device to a network element disposed in the AI model.

The reference signal resource configuration method provided in this application may be applied to reference signal resource configuration in a non-AI scenario, or may be applied to reference signal resource configuration in an AI scenario. This is not limited.

FIG. 3 is a schematic flowchart of a reference signal resource configuration method 300 according to this application.

310: The second network element sends first information, and the first network element receives the first information from the second network element, where the first information is used to configure a first reference signal resource set.

A reference signal resource in this application includes a reference signal (reference signal, RS) resource and/or an SSB resource. For example, the RS resource includes a CSI resource. A reference signal resource included in the first reference signal resource set may include an RS resource, an SSB resource, or a combination of an RS resource and an SSB resource. This is not limited.

320: The second network element sends second information, and the first network element receives the second information from the second network element.

The second information is used to determine a reference signal resource set group, the reference signal resource set group includes one or more reference signal resource sets, and the one or more reference signal resource sets include the first reference signal resource set.

Any reference signal resource set in the reference signal resource set group may include an RS resource, an SSB resource, or a combination of an RS resource and an SSB resource.

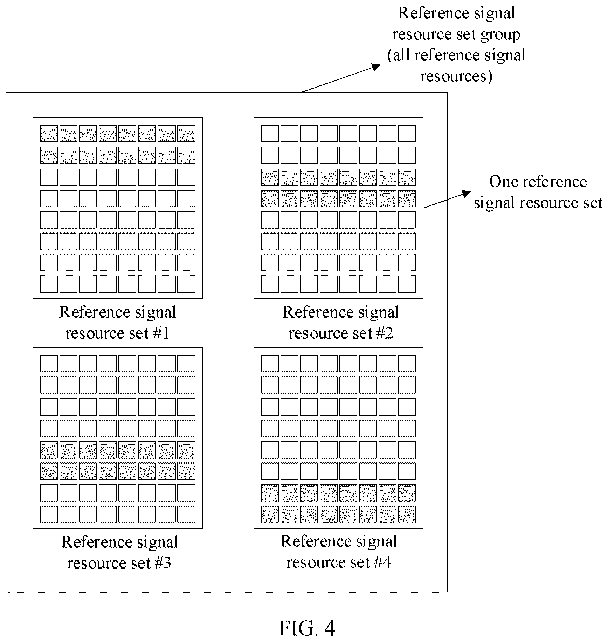

FIG. 4 is a diagram of a reference signal resource configuration method according to this application. FIG. 4 shows a reference signal resource set group. The reference signal resource set group includes four reference signal resource sets in total, and each reference signal resource set includes 16 reference signal resources. For a first network element (for example, UE), first information from a second network element (for example, a base station) is used to configure a reference signal resource set (referred to as a first reference signal resource set), and the reference signal resource set is a reference signal resource set in one or more reference signal resource sets configured by the second network element. The reference signal resource set group may be determined based on the one or more reference signal resource sets.

In the technical solution of this application, the second network element configures the first reference signal resource set for the first network element based on the first information. A quantity of reference signal resources included in the first reference signal resource set may be less than or equal to a maximum quantity of reference signal resources that the second network element can support. All reference signal resources configured by the second network element are indicated to the first network element based on second information. The first network element may determine the reference signal resource set group based on the second information, where the reference signal resource set group includes the one or more reference signal resource sets, and the one or more reference signal resource sets include the first reference signal resource set. Based on the first information and the second information, the first network element may learn that the first reference signal resource set includes all the reference signal resources configured by the second network element, or may learn that the first reference signal resource set is further associated with one or more other reference signal resource sets. In the former case, the first network element may determine that reference signal resources in the first reference signal resource set are all the reference signal resources configured by the second network element. In the latter case, the first network element may determine that reference signal resources in the first reference signal resource set and reference signal resources in the one or more other reference signal resource sets constitute all the reference signal resources configured by the second network element.

Based on the foregoing technical solution provided in this application, when the second network element configures reference signal resources, a quantity of reference signal resources is not limited by the maximum quantity of reference signal resources that the first network element can support. Even if the quantity of reference signal resources configured by the second network is greater than the maximum quantity of reference signal resources, the second network element can send the second information to the first network element, so that the first network element can learn that the second network element configures at least two reference signal resource sets. In this way, flexibility of reference signal resource configuration can be improved, and a capability of a reference signal resource measurement network element (namely, the first network element) is no longer a limitation.

Optionally, the reference signal resource set group includes the one or more reference signal resource sets. For example, the reference signal resource set group includes the first reference signal resource set; or the reference signal resource set group includes one reference signal resource set, that is, the first reference signal resource set includes the set of all the reference signal resources configured by the second network element; or the reference signal resource set group includes at least two reference signal resource sets, and the at least two reference signal resource sets include the first reference signal resource set.

If the reference signal resource set group includes the first reference signal resource set, the first network element determines the first reference signal resource set based on the first information, and the first network element determines, based on the second information, that the first reference signal resource set is the reference signal resource set group. If the reference signal resource set group includes the at least two reference signal resource sets, the first network element determines the first reference signal resource set based on the first information, and the second network element determines a reference signal resource set other than the first reference signal resource set in the reference signal resource set group based on the second information.

It should be understood that determining the reference signal resource set group means determining all reference signal resource sets in the reference signal resource set group. In other words, determining the one or more reference signal resource sets means determining the reference signal resource set group.

Optionally, in this application, the second information is used by the first network element to determine the reference signal resource set group. In other words, the second information indicates an association relationship of the one or more reference signal resource sets. It should be understood that, when the reference signal resource set group includes a reference signal resource set, it may also be considered that the reference signal resource set is associated with the reference signal resource set; or when the reference signal resource set group includes at least two reference signal resource sets, the at least two reference signal resource sets are associated.

FIG. 4 is used as an example. The second information sent by the second network element is used to determine a reference signal resource set group, and the reference signal resource set group includes 64 reference signal resources in total. The second network element configures the first reference signal resource set based on the first information, where the first reference signal resource set includes 16 reference signal resource.

Optionally, the second information includes one or more of the following:
a quantity of reference signal resource sets included in the reference signal resource set group;
periodicity information of the reference signal resource set group;
an identifier of each reference signal resource set included in the reference signal resource set group;
an identifier of configuration information of each reference signal resource set included in the reference signal resource set group;
pattern information of the one or more reference signal resource sets included in the reference signal resource set group in the reference signal resource set group; and
information about the association relationship of the one or more reference signal resource sets included in the reference signal resource set group.

The following uses the reference signal resource set group and the first reference signal resource set (for example, a reference signal resource set #1) shown in FIG. 4 as an example to describe the foregoing implementation of the second information.

For example, the second information may include four reference signal resource sets included in the reference signal resource set group: the reference signal resource set #1, a reference signal resource set #2, a reference signal resource set #3, and a reference signal resource set #4. Optionally, this implementation may be used when reference signal resource sets included in the reference signal resource set group correspond to consecutive reference signal resource set configuration periods. FIG. 4 is used as an example. The reference signal resource set group includes four reference signal resource sets, and the four reference signal resource sets correspond to four consecutive configuration periods (namely, reference signal resource set configuration periods). The reference signal resource set #1 corresponds to a first configuration period, the reference signal resource set #2 corresponds to a second configuration period, and so on. The first network element determines, as a reference signal resource set group by identifying each reference signal resource set, several reference signal resource sets whose quantity is indicated by the second information.

For another example, the second information may include a total quantity of reference signal resources included in the reference signal resource set group. Optionally, this implementation may be used when reference signal resource sets included in the reference signal resource set group correspond to consecutive reference signal resource set configuration periods. The first network element identifies a quantity of reference signal resources in each reference signal resource set, and determines, as a reference signal resource group or a reference signal resource set group, reference signal resources in several reference signal resource sets whose total quantity is equal to the quantity indicated by the second information.

For another example, the second information may include the periodicity information of the reference signal resource set group.

Specifically, the at least two reference signal resource sets included in the reference signal resource set group are periodic, and different periods correspond to different reference signal resource sets. For example, the reference signal resource set group includes four reference signal resource sets, and each reference signal resource set includes 16 reference signal resources. The 16 reference signal resources may be configured based on one piece of configuration information. The configuration information is periodically sent, and all 64 reference signal resources in the reference signal resource set group may be completely configured after four periods. In addition, the second information is also periodic, and one period of the second information corresponds to the four periods of the configuration information. The second network element periodically sends 16 reference signal resources. Optionally, different reference signal resources correspond to different beams. For example, 16 reference signal resources sent in a first period are used to carry a beam #1 to a beam #16, 16 reference signal resources sent in a second period are used to carry a beam #17 to a beam #32, 16 reference signal resources sent in a third period are used to carry a beam #33 to a beam #48, and 16 reference signal resources sent in a fourth period are used to carry a beam #49 to a beam #64. It is assumed that one period of the configuration information is 20 milliseconds. In this case, a period of the second information is 80 milliseconds. In this example, the second information may indicate 80 milliseconds. In some examples, the configuration information may be carried in one or more of the following fields: a channel state information (channel state information, CSI) report configuration (CSI-ReportConfig) field, a CSI-resource configuration (CSI-ResourceConfig) field, a CSI-resource set (ResourceSet) field, or a CSI-resource set list (ResourceSetList) field. It may be understood that the first information in step 210 is an example of the configuration information, or configuration information of any reference signal resource set in the reference signal resource set group may be referred to as first information. The first network element identifies a reference signal resource set in a period corresponding to one piece of configuration information, and determines, as a reference signal resource set group, one or more reference signal resource sets identified in a period of the reference signal resource set group indicated by the second information.

For another example, the second information may include the identifier of each reference signal resource set included in the reference signal resource set group. For example, if identifiers of the four reference signal resource sets shown in FIG. 4 are an identifier 1, an identifier 2, an identifier 3, and an identifier 4 respectively, the second information may include the identifier 1 to the identifier 4. Alternatively, if identifiers of the four reference signal resource sets are an identifier a, an identifier b, an identifier c, and an identifier d respectively, the second information may include the identifier a to the identifier d. The identifier of the reference signal resource set may be defined in multiple manners, and may be defined in another manner. The first network element identifies the identifiers of the reference signal resource sets indicated by the second information, and determines the reference signal resource sets as a reference signal resource set group or a reference signal resource group.

For another example, the second information may include the identifier of the configuration information of each reference signal resource set included in the reference signal resource set group. For example, the second information carries identifiers of configuration information of the four reference signal resource sets included in the reference signal resource set group, for example, a CSI-ReportConfig identifier.

For another example, the second information may include the pattern information of the one or more reference signal resource sets included in the reference signal resource set group in the reference signal resource set group. For example, reference signal resource sets in each group correspond to different locations in a numbered order. A pattern shown in FIG. 4 is used as an example. The reference signal resource set #1 corresponds to a first quarter of beam sets in a full-beam codebook, the reference signal resource set #2 corresponds to a second quarter of the beam sets in the full-beam codebook, and so on.

For another example, the second information may include information about an association relationship between at least two reference signal resource sets in the reference signal resource set group. In an example, the information about the association relationship includes information about relative locations of the at least two reference signal resource sets in the reference signal resource set group. Optionally, the relative location includes but is not limited to a relative location in time domain.

For example, the information about the relative location may include:
a sequence number of a relative location of the first reference signal resource set in the reference signal resource set group; or
an association relationship between the first reference signal resource set and a second reference signal resource set in the reference signal resource set group.

The first reference signal resource set generally refers to any reference signal resource set in the reference signal resource set group, and the second reference signal resource set generally refers to another reference signal resource set different from the first reference signal resource in the reference signal resource set group.

Based on the relative locations of the at least two reference signal resource sets in the reference signal resource set group in the reference signal resource set group, the UE can distinguish between the at least two reference signal resource sets corresponding to different beams/resources. For example, if the at least two reference signal resource sets are specifically four reference signal resource sets, the second information may indicate that a reference signal resource set #1 corresponds to a group #1, a reference signal resource set #2 corresponds to a group #2, a reference signal resource set #3 corresponds to a group #3, and a reference signal resource set #4 corresponds to a group #4. The UE can distinguish, based on the second information, that reference signal resources included in each of the four groups are different. For example, if each reference signal resource set includes 16 reference signal resources, the reference signal resource set group includes 64 reference signal resources in total. In this case, the UE may identify that a reference signal resource #1 to a reference signal resource #16 in the group #1 correspond to a reference signal resource #1 to a reference signal resource #16 in the 64 reference signal resources in the reference signal resource set group, a reference signal resource #1 to a reference signal resource #16 in the group #2 correspond to a reference signal resource #17 to a reference signal resource #32 in the 64 reference signal resources in the reference signal resource set group, a reference signal resource #1 to a reference signal resource #16 in the group #3 correspond to a reference signal resource #33 to a reference signal resource #48 in the 64 reference signal resources in the reference signal resource set group, and a reference signal resource #1 to a reference signal resource #16 in the group #4 correspond to a reference signal resource #49 to a reference signal resource #64 in the 64 reference signal resources in the reference signal resource set group.

In another example, the information about the association relationship may further include an association relationship between the first reference signal resource set and any reference signal resource set (for example, the second reference signal resource set) in the reference signal resource set group. For example, the first reference signal resource set is a reference signal resource set before or after the second reference signal resource set in the reference signal resource set group. For example, if the first reference signal resource set is configured by using first configuration signaling, the first configuration signaling includes identification information of the second reference signal resource set, to associate the first reference signal resource set with the second reference signal resource set.

The foregoing describes some examples of specific implementations of the second information.

Optionally, the second information may be included in one piece of indication signaling, or may be included in multiple pieces of indication signaling.

For example, the second information includes the quantity of reference signal resource sets included in the reference signal resource set group and the periodicity information, and the second information may be included in one piece of indication signaling.

For example, the second information includes the identifier of each reference signal resource set in the reference signal resource set group, or the identifier of the configuration information of each reference signal resource set, or the pattern information of the one or more reference signal resource sets in the reference signal resource set group, and the second information may be included in the multiple pieces of indication signaling. In an example, if the second information is included in the multiple pieces of indication signaling, each of the multiple pieces of indication signaling corresponds to one reference signal resource set in the reference signal resource set group. FIG. 4 is used as an example. The reference signal resource set group includes the four reference signal resource sets, and the second information may be included in four pieces of indication signaling. The four pieces of indication signaling respectively correspond to the four reference signal resource sets, and each piece of indication signaling indicates information about the corresponding reference signal resource set. For example, the indication signaling #1 indicates information about the reference signal resource set #1, for example, an identifier of the reference signal resource set #1 or an identifier of configuration information of the reference signal resource set #1. Certainly, a case in which each indication signaling corresponds to one reference signal resource set is not limited. For example, some of the multiple pieces of indication signaling correspond to one reference signal resource set, and some of the multiple pieces of indication signaling may correspond to two or more reference signal resource sets. This is not limited.

Optionally, if the second information is included in the one or more pieces of indication signaling, configuration information of the one or more reference signal resource sets included in the reference signal resource set group may be sent by the second network element independently of the second information. For example, the second network element sends the second information to the first network element, so that the first network element determines a reference signal resource set group. In addition, the second network element sends the configuration information of each reference signal resource set in the reference signal resource set group to the first network element. The first reference signal resource set in the reference signal resource set group is used as an example. Configuration information of the first reference signal resource set is referred to as first information in this specification. The first reference signal resource set generally refers to any reference signal resource set in the reference signal resource set group. Therefore, each reference signal resource set in the reference signal resource set group corresponds to one piece of first information, namely, the configuration information of each reference signal resource set.

Optionally, in another example, the second information is included in multiple pieces of configuration signaling, and each of the multiple pieces of configuration signaling corresponds to one reference signal resource set in the reference signal resource set group. Each piece of configuration signaling includes the identifier of the reference signal resource set group and configuration information of a reference signal resource set corresponding to the configuration signaling. For example, the first configuration signaling in the multiple pieces of configuration signaling corresponds to the first reference signal resource set. The first configuration signaling includes the identifier of the reference signal resource set group and the configuration information (namely, the first information) of the first reference signal resource set.

FIG. 4 is used as an example. The reference signal resource set group includes the four reference signal resource sets. It is assumed that a group identifier of the reference signal resource set group is a group #1. The second information is included in four pieces of configuration signaling, and the four pieces of configuration signaling #1 to #4 respectively correspond to the reference signal resource set #1 to the reference signal resource set #4. Each piece of configuration signaling includes the identifier of the reference signal resource set group and configuration information of a reference signal resource set corresponding to the configuration signaling. For example, the configuration signaling #1 includes a group identifier group#1 and configuration information of the reference signal resource set #1; the configuration signaling #2 includes the group identifier group#1 and configuration information of the reference signal resource set #2; and so on. The first network element receives the configuration signaling #1 to the configuration signaling #4, and may learn, based on the group identifier group#1, that four reference signal resource sets configured by using the four pieces of configuration signaling belong to one reference signal resource set group, namely, the group #1.

The second network element configures the first reference signal resource set for the first network element based on the first information. The first network element may learn of, based on the second information, all reference signal resources (or reference signal resource sets) configured by the second network element. After determining all the reference signal resources configured by the second network element, the first network element may measure the reference signal resources to obtain measurement results. The measurement results can be used for different purposes in different scenarios. For example, in an AI scenario, the measurement result may be used to determine input information and/or target output information (which may also be referred to as a label or a truth value) for an AI model, and then perform an AI-related operation on the AI model based on the input information and/or the target output information for the AI model. For another example, in a non-AI scenario, the measurement result may be used for channel estimation and the like.

It should be noted that, in this application, measurement of a reference signal resource may be measurement of a reference signal on the reference signal resource, or beam scanning. Similarly, measurement of a reference signal resource set may be measurement of a reference signal on a reference signal resource included in the reference signal resource set, or beam scanning.

The following describes an example in which the technical solutions provided in this application are applied to an AI scenario.

For example, a first network element is UE, and a second network element is a network device (for example, a base station).

### 1. An AI model is deployed on the network device.

In this scenario, the UE receives first information and second information from the network device, and provides reporting information for the network device based on the first information and the second information. The network device may obtain input information and/or target output information for the AI model based on the reporting information. The input information and/or the target output information for the AI model may be used for an AI model operation for the AI model deployed on the network device.

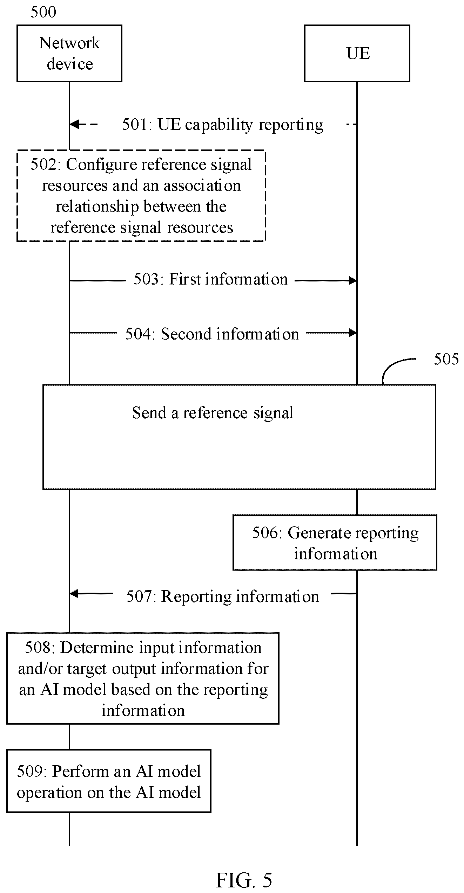

FIG. 5 shows an example of a reference signal resource configuration method 500 according to this application.

501: Optionally, the UE reports capability information to the network device, where the capability information indicates a maximum quantity of reference signal resources that can be measured by the UE in a reference signal resource measurement period.

502: Optionally, the network device configures reference signal resources and an association relationship between the reference signal resources.

The network device configures, in a reference signal resource measurement period (or referred to as a beam management period) based on the capability information reported by the UE, the maximum quantity of reference signal resources that the UE can support. The reference signal resources configured by the network device in the reference signal measurement period are a reference signal resource set, for example, a first reference signal resource set. If a total quantity of reference signal resources configured by the network device is greater than the maximum quantity of reference signal resources that the UE can support, the network device further needs to configure an association relationship of all reference signal resources. Specifically, this can be implemented by configuring an association relationship of reference signal resource sets, so that the UE determines a reference signal resource set group based on the association relationship of the reference signal resource sets.

503: The network device sends the first information, and the UE receives the first information from the network device.

The UE determines the first reference signal resource set based on the first information.

504: The network device sends the second information, and the UE receives the second information from the network device.

The UE determines the reference signal resource set group based on the second information, where the reference signal resource set group includes the first reference signal resource set.

For the first information in step 503 and the second information in step 504, refer to the foregoing descriptions, for example, descriptions of the first information and the second information in the method 300. Details are not described again.

505: The UE measures the first reference signal resource set based on the first information to obtain a measurement result.

Optionally, the network device configures the reference signal resource set group for the UE, where the reference signal resource set group includes one or more reference signal resource sets, and the one or more reference signal resource sets include the first reference signal resource set. Whether the UE measures all reference signal resource sets included in the reference signal resource set group may depend on a specific implementation of the UE. For example, the UE may measure only the first reference signal resource set (or measure a reference signal based on a reference signal resource in the first reference signal resource set) to obtain a measurement result; or the UE may measure two or more reference signal resource sets in the reference signal resource set group to obtain a measurement result; or the UE measures each reference signal resource set in the reference signal resource set group to obtain a measurement result.

It should be understood that, that the UE measures a reference signal resource set may include that the UE measures at least one reference signal resource in the reference signal resource set. Optionally, the UE may measure each reference signal resource included in the reference signal resource set.

In addition, it should be understood that, because the reference signal resource set group includes the one or more reference signal resource sets, sending of the reference signal is implemented in multiple periods, and each period corresponds to one reference signal resource set.

506: The UE generates the reporting information.

Optionally, the UE determines a reporting manner based on the second information, where the reporting manner indicates a quantity of reporting times of the reporting information. The UE generates the reporting information based on the determined reporting manner and the measurement result. Optionally, the UE may also determine the reporting manner based on the capability information of the UE and the second information. For example, when the UE has a capability of reporting all information to be reported, it may be determined that the quantity of reporting times of the reporting information is 1, that is, the reporting information is reported once. When the UE does not have a capability of reporting all information to be reported, it may be determined that the quantity of reporting times of the reporting information is n, where n is an integer greater than 1. In an example, if the reference signal resource set group includes at least two reference signal resource sets, the UE may perform reporting once when the UE completes measurement of one reference signal resource set. The UE can achieve a higher precision range of the reporting information by using higher layer signaling instead of a physical layer. In other words, reporting information with higher precision may be reported by using the higher layer signaling. For example, a measurement metric (metric) is a reference signal received power (reference signal received power, RSRP) value. In this case, the reporting information reported by the first network element to the second network element is an RSRP value. Data precision of an RSRP value reported by the first network element by using a layer 3 (layer 3, L3 for short) is higher than that of an RSRP value reported by the first network element by using a layer 1 (layer 1, L1 for short). In an example, a data range of the RSRP value reported by the first network element by using the layer 1 may be [-44 dBm, -140 dBm], and a data range of the RSRP value reported by using the layer 3 may be [-31 dBm, -156 dBm]. It can be learned that when the layer 3 is used for reporting, data precision of the reporting information may be higher and the data range is wider. Optionally, the reporting information includes one or more of the following:
a measurement result of at least one reference signal resource in the one or more reference signal resource sets included in the reference signal resource set group;
L measurement results in the measurement result of the at least one reference signal resource in the one or more reference signal resource sets included in the reference signal resource set group, where L is a positive integer; and
information about L reference signal resources that is obtained based on the measurement result of the at least one reference signal resource in the one or more reference signal resource sets included in the reference signal resource set group, where L is a positive integer.

In an example, the UE selects, based on a measurement result of each reference signal resource in each reference signal resource set included in the reference signal resource set group, the information about the L reference signal resources that meet a preset rule. For example, the preset rule may be that, when a measurement amount is RSRP, L reference signal resources corresponding to L measurement values with the strongest RSRP values are selected. Optionally, L may be equal to 1. Optionally, the information about the L reference signal resources may include identifiers of the L reference signal resources. In addition, optionally, the L reference signal resources may be from different reference signal resource sets in the reference signal resource set group, or may be from a same reference signal resource set.

507: The UE sends the reporting information to the network device, and the network device receives the reporting information.

Optionally, the reporting information is carried in physical layer signaling or higher layer signaling. In an implementation, the reporting information is carried in one piece of higher layer signaling, and the quantity of reporting times is one.

In an example, in step 504, the second information is included in multiple pieces of configuration signaling, and each of the multiple pieces of configuration signaling is used to configure one reference signal resource set in the reference signal resource set group. In step 507, the reporting information is carried on a first uplink time-frequency resource, and the first uplink time-frequency resource is configured by using second configuration signaling in the multiple pieces of configuration signaling. For example, the second configuration signaling is a latest piece of configuration signaling in the multiple pieces of configuration signaling. The second configuration signaling is configuration signaling for configuring a target reference signal resource set, and the target reference signal resource set is a reference signal resource set with a latest relative location in time domain in the reference signal resource set group. To be specific, if the network device sends multiple pieces of configuration signaling based on multiple reference signal resource sets in the reference signal resource set group, to separately configure the multiple reference signal resource sets, the first uplink time-frequency resource used by the first network element to send the reporting information may be further configured in the latest piece of configuration signaling in time domain. After receiving the multiple pieces of configuration signaling, the first network element learns, based on the latest piece of configuration signaling in time domain (namely, the second signaling), that the one or more reference signal resource sets included in the reference signal resource set group have been configured, and obtains configuration information of the first uplink time-frequency resource based on the second configuration signaling, to send the reporting information on the first uplink time-frequency resource.

508: The network device determines the input information and/or the target output information for the AI model based on the reporting information.

Optionally, the input information for the AI model includes one or more of the following:
the measurement result of the at least one reference signal resource in the one or more reference signal resource sets included in the reference signal resource set group; and
information about M measurement results or M reference signal resources that is determined based on the measurement result of the at least one reference signal resource in the one or more reference signal resource sets included in the reference signal resource set group, where M is a positive integer.

In an example, the UE measures each reference signal resource in each reference signal resource set in the reference signal resource set group to obtain all measurement results, and selects the M measurement results from all the measurement results based on a preset rule. For example, the preset rule may be M strongest measurement values in all the measurement results. Further, if a measurement amount is RSRP, the M strongest measurement values are M measurement values with the strongest RSRP values. Optionally, M may be equal to 1.

Optionally, the target output information for the AI model includes one or more of the following:
the measurement result of the at least one reference signal resource in the one or more reference signal resource sets included in the reference signal resource set group; and
information about N reference signal resources that is determined based on the measurement result of the at least one reference signal resource in the one or more reference signal resource sets included in the reference signal resource set group, where N is a positive integer.

In an example, the UE measures each reference signal resource in each reference signal resource set in the reference signal resource set group to obtain all measurement results, and selects the N measurement results from all the measurement results based on a preset rule. For example, the preset rule may be N strongest measurement values in all the measurement results. Further, if a measurement amount is RSRP, the N strongest measurement values are N measurement values with the strongest RSRP values. Optionally, N may be equal to 1.

509: The network device performs the AI model operation on the AI model based on the input information and/or the target output information for the AI model.

Optionally, the AI model operation includes one or more of the following:
AI model inference, AI model training (including initial training and/or update), AI model training data collection, or AI model monitoring. The update includes fine-tune, updating, or retaining, which is not limited.

The network device may perform an AI-related operation on the AI model after obtaining the input information and/or the target output information for the AI model. Optionally, if the AI-related operation needs to be performed multiple times, a procedure shown in FIG. 5 may be repeated.

It may be understood that, when an operation for the AI model, such as training and/or inference, is not performed by the network device, step 509 or steps 508 and 509 may be performed by an operation network element of the AI model. The method further includes: The network device sends operation-related information of the AI model or the reporting information to the operation network element of the AI model.

### 2. An AI model is deployed on the UE.

In this scenario, the UE receives first information and second information from the network device, and obtains input information and/or target output information for the AI model based on the first information and the second information. The input information and/or the target output information for the AI model may be used for an AI model operation for the AI model deployed on the UE.

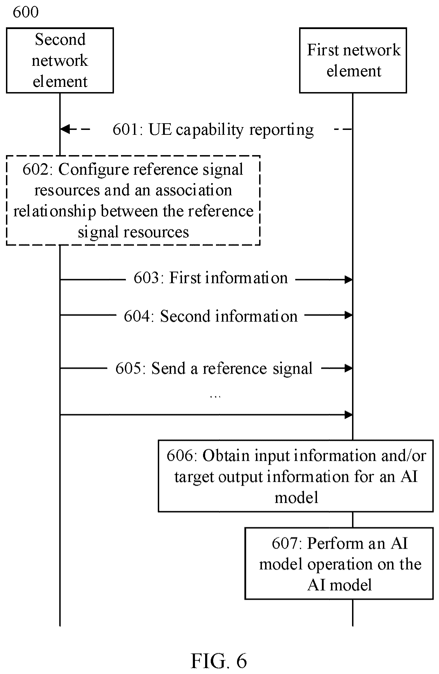

FIG. 6 shows another example of a reference signal resource configuration method 600 according to this application.

601: Optionally, the UE reports capability information to the network device, where the capability information indicates a maximum quantity of reference signal resources that can be measured by the UE in a reference signal measurement period.

602: Optionally, the network device configures reference signal resources and an association relationship between the reference signal resources.

603: The network device sends the first information, and the UE receives the first information from the network device.

604: The network device sends the second information, and the UE receives the second information from the network device.

605: The UE measures a first reference signal resource set based on the first information to obtain a measurement result.

For steps 601 to 605, refer to corresponding descriptions of steps 501 to 505. For brevity, details are not described again.

606: The UE generates the input information and/or the target output information for the AI model based on the measurement result and the second information.

607: The UE performs the AI model operation on the AI model based on the input information and/or the target output information for the AI model.

After obtaining the input information and/or the target output information for the AI model, a terminal device may perform an AI-related operation on the AI model. Optionally, if the AI-related operation needs to be performed multiple times, a procedure shown in FIG. 5 may be repeated.

It may be understood that, when an operation for the AI model, such as training and/or inference, is not performed by the UE, step 607 or steps 606 and 607 may be performed by an operation network element of the AI model. The method further includes: The UE sends operation-related information of the AI model or the reporting information to the operation network element of the AI model.

The foregoing describes in detail how the reference signal resource configuration method provided in this application is applied to the AI scenario. As described above, the method in this application may also be applied to a non-AI scenario. For example, in the non-AI scenario, if the UE needs to measure all reference signal resources configured on a network side, and a quantity of all the reference signal resources exceeds the maximum quantity of reference signal resources that the UE can support in the reference signal resource measurement period, the method in this application may be used.

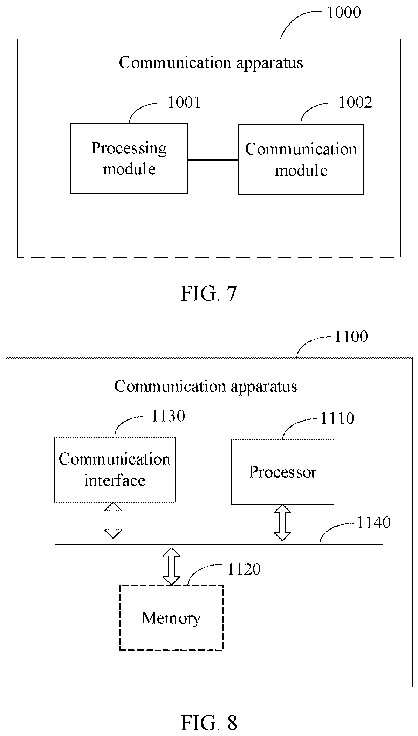

The foregoing describes in detail the reference signal resource configuration method provided in this application. The following describes corresponding communication apparatuses. With reference to FIG. 7, this application provides a communication apparatus 1000.

As shown in FIG. 7, the communication apparatus 1000 includes a processing module 1001 and a communication module 1002. The communication apparatus 1000 may be a terminal device, or may be a communication apparatus that is used in the terminal device, that is used collaboratively with the terminal device, or that can implement a method performed by the terminal device, for example, a chip, a chip system, or a circuit. Alternatively, the communication apparatus 1000 may be a network device, or may be a communication apparatus that is used in the network device, that is used collaboratively with the network device, or that can implement a method performed by the network device, for example, a chip, a chip system, or a circuit. For example, the network device may be the access network device in the method embodiments of this application.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement processing functions of the terminal device (or the first network element) in the embodiments in FIG. 1 to FIG. 6, and the communication module 1002 may be configured to implement receiving and sending functions of the terminal device (or the first network element) in the embodiments in FIG. 1 to FIG. 6.

When the communication apparatus 1000 is used in the network device, the processing module 1001 may be configured to implement processing functions of the network device (for example, the base station) in the embodiments in FIG. 1 to FIG. 6, and the communication module 1002 may be configured to implement receiving and sending functions of the network device (or the second network element) in the embodiments in FIG. 1 to FIG. 6.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

In addition, with reference to FIG. 8, this application further provides a communication apparatus 1100. Optionally, the communication apparatus 1100 may be a chip or a chip system. Optionally, in this application, the chip system may include a chip, or may include a chip and another discrete device.

The communication apparatus 1100 may be configured to implement functions of any network element in the communication system described in the foregoing examples. The communication apparatus 1100 may include at least one processor 1110. Optionally, the processor 1110 is coupled to a memory. The memory may be located in the apparatus, the memory may be integrated with the processor, or the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or a circuit, the communication interface 1130 in the apparatus 1100 may be alternatively an input/output circuit, and may input information (or receive information) and output information (or send information). The processor is an integrated processor, a microprocessor, an integrated circuit, or a logic circuit. The processor may determine output information based on input information.

The coupling in this application may be an indirect coupling or a communication connection between apparatuses, units, or modules, may be implemented in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 8, the processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representing the bus in FIG. 8, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the method disclosed with reference to this application may be directly performed by a hardware processor, or may be performed by using a combination of hardware and a software module in the processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this application may be alternatively a circuit or any other apparatus that can implement a storage function, and is configured to store program instructions and/or data.

In a possible implementation, the communication apparatus 1100 may be used in a network device, for example, the access network device in embodiments of this application. Specifically, the communication apparatus 1100 may be a network device, or may be an apparatus that can support the network device in implementing corresponding functions of the network device in any one of the foregoing examples. The memory 1120 stores a computer program (or instructions) and/or data for implementing corresponding functions of the network device in any one of the foregoing examples. The processor 1110 may execute the computer program stored in the memory 1120, to complete the method performed by the network device in any one of the foregoing examples. The communication interface in the communication apparatus 1100 may be configured to: interact with a terminal device, and send information to the terminal device or receive information from the terminal device.

In another possible implementation, the communication apparatus 1100 may be used in a terminal device. Specifically, the communication apparatus 1100 may be a terminal device, or may be an apparatus that can support the terminal device in implementing functions of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. The communication interface in the communication apparatus 1100 may be configured to: interact with a network device (for example, the access network device), and send information to the network device or receive information from the access network device.

The communication apparatus 1100 provided in this example may be used in the network device (for example, the access network device) to complete the method performed by the network device, or may be used in the terminal device to complete the method performed by the terminal device. Therefore, for technical effects that can be achieved by the communication apparatus, refer to the foregoing method embodiments. Details are not described herein again.

Based on the foregoing examples, this application provides a communication system. In an example, the communication system includes a first network element and a second network element. Optionally, the communication system may further include at least one AI node. For details, refer to descriptions in FIG. 1 or FIG. 2. The communication system may implement the reference signal resource configuration method provided in the embodiments shown in FIG. 3 to FIG. 6.

All or a part of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

At least one (item) in embodiments of this application indicates one (item) or more (items). Multiple (items) means two (items) or more (items). "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish the objects from each other.

The term "include" and any other variant thereof mentioned in embodiments of this application are intended to cover non-exclusive inclusion. For example, a process, a method, a system, a product, or a device that includes a series of steps or units is not limited to the listed steps or units, but optionally further includes steps or units not listed, or optionally further includes another inherent step or unit of the process, the method, the product, or the device. It should be noted that, in this application, the word like "example" or "for example" is used to give an example, an illustration, or a description. Any method or design scheme described as "example" or "for example" in this application should not be construed as being preferred or having more advantages over other methods or design schemes. Specifically, use of the word like "example" or "for example" is intended to describe related technical solutions or concepts by using examples in a specific manner.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A reference signal resource configuration method, performed by a first network element or a chip used in a first network element, and comprising:
receiving first information from a second network element, wherein the first information is used to configure a first reference signal resource set; and
receiving second information from the second network element, wherein the second information is used to determine a reference signal resource set group, the reference signal resource set group comprises one or more reference signal resource sets, and the one or more reference signal resource sets comprise the first reference signal resource set.

2. The method according to claim 1, wherein the second information comprises one or more of the following:
a quantity of reference signal resource sets comprised in the reference signal resource set group;
periodicity information of the reference signal resource set group;
an identifier of each reference signal resource set comprised in the reference signal resource set group;
an identifier of configuration information of each reference signal resource set comprised in the reference signal resource set group;
pattern information of the one or more reference signal resource sets comprised in the reference signal resource set group in the reference signal resource set group; or
information about an association relationship of the one or more reference signal resource sets comprised in the reference signal resource set group.

3. The method according to claim 1 or 2, wherein the second information is comprised in one piece of indication signaling; or the second information is comprised in multiple pieces of indication signaling, wherein if the second information is comprised in the multiple pieces of indication signaling, each of the multiple pieces of indication signaling corresponds to one reference signal resource set in the reference signal resource set group.

4. The method according to any one of claims 1 to 3, wherein the second information is comprised in multiple pieces of configuration signaling, and first configuration signaling in the multiple pieces of configuration signaling comprises an identifier of the reference signal resource set group and the first information.

5. The method according to any one of claims 2 to 4, wherein the information about the association relationship comprises one or more of the following:
a sequence number of a relative location of the first reference signal resource set in the reference signal resource set group; and
an association relationship between the first reference signal resource set and a second reference signal resource set in the reference signal resource set group.

6. The method according to any one of claims 1 to 5, wherein the method further comprises:
measuring, by the first network element, a reference signal based on the first information, to obtain a measurement result; and
generating, by the first network element, input information and/or target output information for an AI model based on the measurement result and the second information.

7. The method according to claim 6, wherein the input information for the AI model comprises one or more of the following:
a measurement result of at least one reference signal resource in the one or more reference signal resource sets comprised in the reference signal resource set group; and
information about M measurement results or M reference signal resources, the information about M measurement results or M reference signal resources being determined based on the measurement result of the at least one reference signal resource in the one or more reference signal resource sets comprised in the reference signal resource set group, wherein M is a positive integer.

8. The method according to claim 6, wherein the target output information for the AI model comprises one or more of the following:
a measurement result of at least one reference signal resource in the one or more reference signal resource sets comprised in the reference signal resource set group; and
information about N reference signal resources that is determined based on the measurement result of the at least one reference signal resource in the one or more reference signal resource sets comprised in the reference signal resource set group, wherein N is a positive integer.

9. The method according to any one of claims 1 to 5, wherein the method further comprises:
measuring a reference signal based on the first information, to obtain a measurement result;
determining a reporting manner based on the second information, wherein the reporting manner indicates a quantity of reporting times of reporting information; and
generating the reporting information based on the determined reporting manner and the measurement result.

10. The method according to claim 9, wherein the reporting information is carried in physical layer signaling or carried in higher layer signaling.

11. The method according to claim 10, wherein the reporting information is carried in one piece of higher layer signaling, and the quantity of reporting times is one.

12. The method according to any one of claims 9 to 11, wherein the reporting information comprises one or more of the following:
a measurement result of at least one reference signal resource in the one or more reference signal resource sets comprised in the reference signal resource set group;
L measurement results in the measurement result of the at least one reference signal resource in the one or more reference signal resource sets comprised in the reference signal resource set group, wherein L is a positive integer; and
information about L reference signal resources that is obtained based on the measurement result of the at least one reference signal resource in the one or more reference signal resource sets comprised in the reference signal resource set group, wherein L is a positive integer.

13. The method according to any one of claims 9 to 12, wherein the second information is comprised in the multiple pieces of configuration signaling, and each of the multiple pieces of configuration signaling is used to configure one reference signal resource set in the reference signal resource set group; and
the reporting information is carried on a first uplink time-frequency resource, and the first uplink time-frequency resource is configured by using second configuration signaling in the multiple pieces of configuration signaling, wherein
the second configuration signaling is a latest piece of configuration signaling in the multiple pieces of configuration signaling, or the second configuration signaling is configuration signaling for configuring a target reference signal resource set, and the target reference signal resource set is a reference signal resource set whose relative location is the latest in time domain in the reference signal resource set group.

14. A reference signal resource configuration method, performed by a second network element or a chip used in a second network element, wherein the method comprises:
sending first information to a first network element, wherein the first information is used to configure a first reference signal resource set; and
sending second information to the first network element, wherein the second information is used to determine a reference signal resource set group, the reference signal resource set group comprises one or more reference signal resource sets, and the one or more reference signal resource sets comprise the first reference signal resource set.

15. The method according to claim 14, wherein the method further comprises:
receiving reporting information from the first network element, wherein the reporting information comprises one or more of the following:
a measurement result of at least one reference signal resource in the one or more reference signal resource sets comprised in the reference signal resource set group;
L measurement results in the measurement result of the at least one reference signal resource in the one or more reference signal resource sets comprised in the reference signal resource set group, wherein L is a positive integer; and
information about L reference signal resources that is obtained based on the measurement result of the at least one reference signal resource in the one or more reference signal resource sets comprised in the reference signal resource set group, wherein L is a positive integer.

16. The method according to claim 15, wherein the method further comprises:
determining input information and/or target output information for an AI model based on the reporting information.

17. The method according to any one of claims 14 to 16, wherein the second information comprises one or more of the following:
a quantity of reference signal resource sets comprised in the reference signal resource set group;
periodicity information of the reference signal resource set group;
an identifier of each reference signal resource set comprised in the reference signal resource set group;
an identifier of configuration information of each reference signal resource set comprised in the reference signal resource set group;
pattern information of the one or more reference signal resource sets comprised in the reference signal resource set group in the reference signal resource set group; and
information about an association relationship of the one or more reference signal resource sets comprised in the reference signal resource set group.

18. The method according to any one of claims 14 to 17, wherein the second information is comprised in one piece of indication signaling; or the second information is comprised in multiple pieces of indication signaling, wherein if the second information is comprised in the multiple pieces of indication signaling, each of the multiple pieces of indication signaling corresponds to one reference signal resource set in the reference signal resource set group.

19. The method according to any one of claims 14 to 18, wherein the second information is comprised in multiple pieces of configuration signaling, and first configuration signaling in the multiple pieces of configuration signaling comprises an identifier of the reference signal resource set group and the first information.

20. The method according to any one of claims 17 to 19, wherein the information about the association relationship comprises one or more of the following:
a sequence number of a relative location of the first reference signal resource set in the reference signal resource set group; and
an association relationship between the first reference signal resource set and a second reference signal resource set in the reference signal resource set group.

21. The method according to any one of claims 16 to 20, wherein the input information for the AI model comprises one or more of the following:
the measurement result of the at least one reference signal resource in the one or more reference signal resource sets comprised in the reference signal resource set group; and
information about M measurement results or M reference signal resources that is determined based on the measurement result of the at least one reference signal resource in the one or more reference signal resource sets comprised in the reference signal resource set group, wherein M is a positive integer.

22. The method according to any one of claims 16 to 21, wherein the target output information for the AI model comprises one or more of the following:
the measurement result of the at least one reference signal resource in the one or more reference signal resource sets comprised in the reference signal resource set group; and
information about N reference signal resources that is determined based on the measurement result of the at least one reference signal resource in the one or more reference signal resource sets comprised in the reference signal resource set group, wherein N is a positive integer.

23. The method according to any one of claims 15 to 22, wherein the reporting information is carried in physical layer signaling or carried in higher layer signaling.

24. The method according to claim 23, wherein the reporting information is carried in one piece of higher layer signaling, and a quantity of reporting times is one.

25. The method according to any one of claims 15 to 24, wherein the second information is comprised in the multiple pieces of configuration signaling, and each of the multiple pieces of configuration signaling is used to configure one reference signal resource set in the reference signal resource set group; and
the reporting information is carried on a first uplink time-frequency resource, and the first uplink time-frequency resource is configured by using second configuration signaling in the multiple pieces of configuration signaling, wherein
the second configuration signaling is a latest piece of configuration signaling in the multiple pieces of configuration signaling, or the second configuration signaling is configuration signaling for configuring a target reference signal resource set, and the target reference signal resource set is a reference signal resource set whose relative location is the latest in time domain in the reference signal resource set group.

26. A communication apparatus, comprising:
a processor, wherein the processor is coupled to a memory, and the processor is configured to invoke computer program instructions stored in the memory, to perform the method according to any one of claims 1 to 25.

27. A communication apparatus, comprising a processor and a communication interface, wherein the communication interface is configured to: receive data and/or information, and transmit the received data and/or information to the processor; the processor processes the data and/or the information; and the communication interface is further configured to output data and/or information processed by the processor, to cause the communication apparatus to perform the method according to any one of claims 1 to 25.

28. A computer-readable storage medium, wherein the computer-readable storage medium stores instructions, and when the instructions are run on a computer, the computer is caused to perform the method according to any one of claims 1 to 25.

29. A computer program product, wherein the computer program product comprises instructions, and when the instructions are run on a computer, the computer is caused to perform the method according to any one of claims 1 to 25.

30. A communication system, comprising the communication apparatus according to claim 26 or 27.
